# EUROPEAN PATENT APPLICATION

(11) **EP 2 302 577 A1**
(43) Date of publication of application: **30.03.2011**
(21) Application number: 09170929.5
(22) Date of filing: 22.09.2009
(51) Int. Cl.: G06Q 30/00

(54) **A customer relationship management system**

(71) Applicant: IPR Taxback Limited, Kilkenny (IE)
(72) Inventor: Clune, Eamon, Kilkenny (IE)
(74) Representative: O'Connor, Michael Donal

(57) **Abstract**

This invention relates to a customer relationship management system of the type comprising a customer relationship management (CRM) component and a document management system (DMS) component. The CRM component comprises a database structure comprising a plurality of sub-databases, the sub-databases having a plurality of client files and third party files stored thereon. The DMS component comprises a plurality of documents arranged in folders and sub-folders. In the previously known CRM systems, the CRM component and the DMS component were essentially stand alone components independent of each other. The DMS component is fully integrated within the CRM so that the documents in the DMS are accessible from within the client file record when the client file record is being inspected by a user of the CRM system. In this way, naming, retrieval and storage of the documents is significantly simplified and more efficient than was heretofore the case.

## Description

This invention relates to a customer relationship management system of the type comprising a customer relationship management (CRM) component and a document management system (DMS) component.

Numerous different types of CRM systems have been proposed. Of the known CRM systems, some are used in conjunction with a DMS component to allow documents relating to a customer record to be stored as well as the customer record. There are however problems with these types of CRM systems. First of all, the known CRM systems often utilise a separate DMS component that stores all of the files independently of the CRM in a tree structure of folders and sub-folders. The system of folders does not have any connection with the CRM so when it is necessary to find a document relating to a customer, a user of the CRM has to search for the document among the folders and sub-folders in the DMS component.

Secondly, in most cases, in order to simplify searching of the folders and subfolders, every document must be named manually in a uniform manner with a client name, a file identifier and the like which is time consuming and errors in the nomenclature of the documents can lead to difficulties retrieving the documents from the DMS in an expeditious manner.

Finally, with the known DMS components, large volumes of documents must be moved from one folder to another from time to time and that involves manual intervention. Human mistakes cause loss of documents by placement of the documents in the wrong folder which leads to delays subsequently processing the documents.

It is an object of the present invention to provide a CRM system that overcomes at least some of the problems with the known types of CRM system.

### Statements of Invention

According to the invention there is provided a Customer Relationship Management system comprising a customer relationship management (CRM) component and a document management system (DMS) component, the DMS component is fully integrated within the CRM so that the documents in the DMS component are accessible from within a client file record;
the CRM component comprising:
a database comprising a plurality of sub-databases logically related to each other and interactive with each other, the sub-databases having a plurality of client files stored thereon and a plurality of third party files stored thereon, each sub-database client file being linked to another file in at least one other sub-database;
   the DMS component comprising:
a plurality of folders and sub-folders containing documents, each folder and subfolder being associated with a client file, the plurality of folders and subfolders containing documents are stored on a separate server, and in which the DMS component comprises a sub-database of the CRM component database, the DMS component sub-database in turn comprises a table having a path to a document in the separate server and a client file identifier.

By having the DMS component fully integrated within the CRM, the documents will be readily accessible from within the CRM. It will not be necessary to trawl through a Windows ® Explorer ® or other tree structure of documents to find the appropriate document. Documents are uploaded and/or exported directly from within a client's file on the CRM and the file names are assigned automatically to the documents. The internal user will have faster access to the documents of a client and can quickly pick exactly the one they require among many documents. The documents are also distributed into folders automatically and therefore a significant amount of time is saved retrieving, naming and storing documents. The internal users are able to increase their efficiency of operation by in excess of 20% of CRM client file records processed by implementing the CRM system according to the present invention.

Furthermore, by implementing a CRM in accordance with the present invention, the possibility of human error such as the deletion of a folder accidentally (or maliciously on purpose), or moving the documents in the folder to the wrong place is obviated. The internal users no longer need to access the actual folder system as everything is done through the CRM system with integral DMS component.

In one embodiment of the invention there is provided a CRM system in which the DMS component is operable as an independent archiving system. By having such a system, the documents in the DMS component can be viewed not only from within the file, but also can be exported in batches by client, by document category, or both. For example, with the CRM according to the invention it is possible to export all documents for a given client, or some documents for a given client, or just documents categorized as a particular type of document for a given group of clients.

In one embodiment of the invention there is provided a CRM system in which each folder and subfolder is given an access permission level rating. By implementing such a system, it is possible to provide different access levels to the different document categories. This will ensure that only a limited number of people can upload, review or export documents containing sensitive materials. Furthermore, only a limited number of people can delete documents from the DMS component although they may be able to review/export the documents.

In one embodiment of the invention there is provided a CRM system in which the CRM comprises a pair of databases, an internal database accessible by the CRM internal users and an external database, periodically populated with data from the internal database and accessible by external users.

In one embodiment of the invention there is provided a CRM system in which the database comprises a plurality of tables and in which the tables are linked to other tables by ID references.

In one embodiment of the invention there is provided a CRM system in which a plurality of the folders and sub-folders are associated with a third party file.

In one embodiment of the invention there is provided a CRM system in which the CRM is implemented on a PostgreSQL server. Preferably, the server uses DynamiCube Version 3.0, FarPoint Spread version 3.5 and Active Reports version 2.0.

In one embodiment of the invention there is provided a CRM system in which there is provided a file ownership system.

In one embodiment of the invention there is provided a link within the client file record that provides access to one of the documents.

In another embodiment of the invention the DM component sub-database table comprises the document category, the document upload date and user and the document processed date and user.

The invention is implemented in software and accordingly extends to computer programs having program instructions to cause a computer to implement the CRM system. The computer program is stored in computer readable memory.

### Detailed Description of the Invention

The invention will now be more clearly understood from the following description of some embodiments thereof given by way of example only with reference to the accompanying drawings, in which:-
Figure 1 is a diagrammatic representation of a system in which the CRM system according to the present invention is implemented;
Figure 2 is a simplified diagrammatic representation of the structure of the CRM system; and
Figure 3 is a simplified diagrammatic representation of the structure of the CRM database.

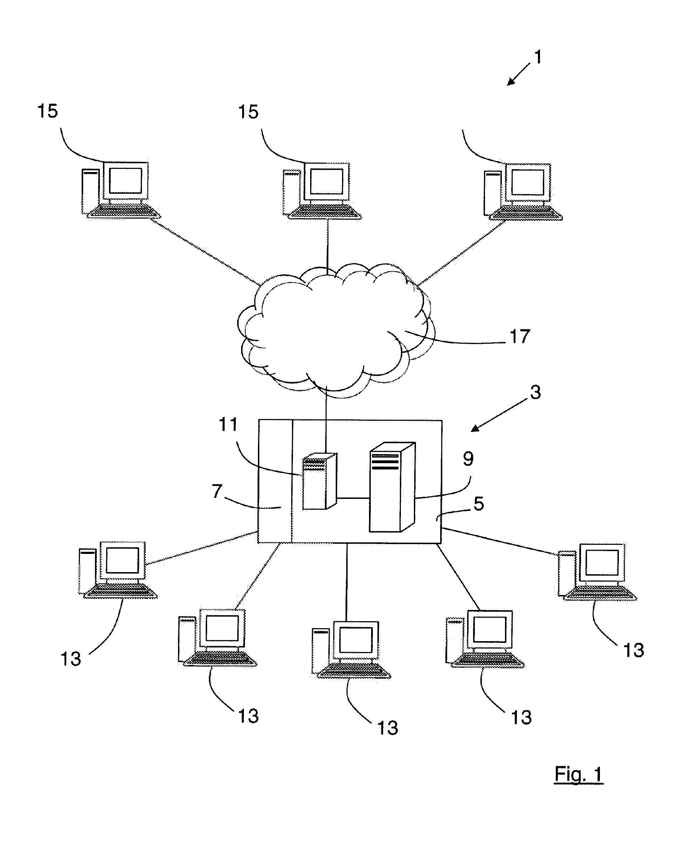

Referring initially to Figure 1, there is shown a system, indicated generally by the reference numeral 1, in which the CRM system according to the invention is implemented. The CRM system 3 comprises a CRM component 5 and a DMS component 7. The CRM component in turn comprises an internal database 9 and an external database 11. The internal database 9 has a plurality of client files stored thereon and a plurality of third party files stored thereon. The DMS component 7 comprises a plurality of folders and sub-folders containing documents. The DMS component 7 is fully integrated within the CRM component 5. The system 1 further comprises a plurality of internal user PCs 13, each of which has access to the internal database 9 of the CRM and a plurality of external user PCs 15, each of which has access to the external database 11 through a network, in this case the internet 17.

In use, internal users will use their PCs 13 to access the internal database to retrieve a customer's client file. This client file will typically contain the clients contact details including address, telephone numbers, email and other details relevant to the business operations of the business entity operating the CRM system. For example, in the case where the business entity operating the CRM system is a tax advisory and refund service, the client file may further contain nationality, country of residence of a client over a given period and tax identification number. The internal users may call up a client file record for viewing on the visual display unit (VDU) of their PC 13 and depending on their permission level the internal users may manipulate or simply review the information in the client file.

The internal user may also perform other tasks such as processing an application of the client and update the client file record accordingly. Most importantly, there is a DMS component 7 integrated within the CRM system 3. In this way, the internal user will have access to all documents stored in the DMS component relevant to the client file from within the client file record. Using the above example, a tax refund form submitted on behalf of the client would be accessible from the DMS component through the CRM client file record. Similarly, report letters sent to the client would also be accessible from the DMS component through the CRM client file record. A link is provided within the client file record that provides access to the document in question. Any documents that are generated by the internal user are saved in the DMS component with a link to the document kept in the client file record for subsequent access.

When reference is made to the DMS component being fully integrated within the CRM, what is meant is that the DMS component is not a separate application/programme, it is in fact part of the CRM itself. The functionality of the DMS component is built in to the CRM. The paths for the documents are stored in a separate table in the CRM database, while the documents themselves are physically stored on a designated server. When a user "clicks" on a document record from within a client file record, the CRM takes the path for the document from the CRM database table where it is stored and opens the document from there.

The table with the paths for the documents also contains references to the relevant client file to which the document relates and additional information such as the document category, the document upload date and user, the document processed date and user, and the like. By having such a CRM, a reporting system of the CRM can be used for generating reports with combined client-specific and document-specific criteria which is advantageous. Furthermore, by having such a CRM, document handling and manipulation is simplified. Uploading a document through the DMS component simply requires the creation of a new record in the database table and moving/copying (both options are available) the file onto the designated server. Exporting a document is similar to a viewing option but the CRM system directly copies the marked documents into a folder that is accessible to the relevant user. Due to the structure employed, document export can be done for one client or for multiple clients at the same time. It can be seen from the foregoing that the uploading, exporting, distribution and categorisation of the documents may be done in a relatively seamless fashion.

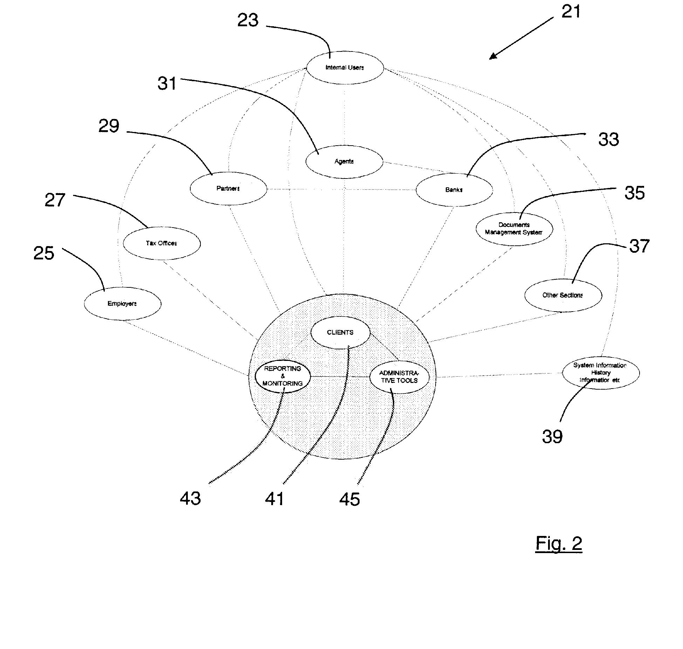

Referring to Figure 2, there is shown a simplified structure of a CRM 21 according to the present invention. The CRM 21 shown is for illustrative purposes and is one that may be used by a business entity providing taxation services and more specifically refunds of taxation to individual customers. The CRM 21 comprises a plurality of sections, including an Internal Users section 23, an Employers section 25, a Tax Offices section 27, a Partners section 29, an Agents section 31, a Banks section 33, a Documents Management System (DMS) section 35, an Other Sections section 37, a System Information/History Information section 39, a Clients section 41, a Reporting and Monitoring section 43 and an Administrative tools section 45. Each section represents a smaller database within the main CRM database. The sections are logically related to each other and interact. It can be seen that there are a number of links 47 between the various sections. The DMS section 35 is an integral component of the CRM system 21.

The Internal Users section 23 links with client files section 41 by the file ownership system (not shown) that is used and the various history information that is kept about activities on the CRM. The Employers section 25 has separate files for each employer where individual employer's information is kept and a link is provided to connect them to client files in Clients section 41. Multiple client-employer linking is possible. The Tax offices section 27 comprises separate files for each tax office in contact with the business entity where individual information relating to the tax office is stored. A Client-Tax Office link is in place similar to the client-employer system described above. The Partners section 29 has separate files for every partner working with the business entity and all information about the partnership is stored in that section. A client file is associated with a partner through a referrals system (one referral may belong to just one partner and one client can have just one referral) and a campaign system.

Referrals and Campaigns have their own separate files. The Agents section 31 comprises other parties' files that refer clients to the business entity. The Banks section 33 has separate files for the various bank branches that are associated with either the business entity or clients. One bank branch can be selected in multiple client files, however a client file can only be linked to a single bank branch. The Other Sections section 37 has other smaller sections on the database for lists, letters and other information used for the normal workflow. The Administrative Tools section 45 is the administrative part of the CRM 21 and contains lists, CRM users information, various statistics, and the like. The Reporting and Monitoring section 43 is for pulling various reports, running queries, export of data into different file formats, and the like. It uses a DynamiCube component giving additional options for data manipulation, pivot tables and so on. There are tools for statistics and monitoring of internal users activity as well.

In use, as the DMS is an integral component of the CRM, it is possible to call a document relevant to the client file or a third party file from within the client file record. Similarly, when a document is created, a simple link between the client file and the DMS component is provided so that the document will be accessible from within the client file record. When the document is created, the document is automatically provided with a naming structure indicative of the client file or third party file to which it relates. Document names are assigned by the system in the format <file ID>_<ID of the record for this document in the documents table on the database>_<initial name of the file>. For example, if a document originally named W2_Form1.doc, the system will automatically rename it to 50004000_90124545_W2_Forml.doc. Many document names might start with the same client ID (if they are all uploaded for the same client) but the second ID is unique for each document.

The documents in the DMS component are categorised and stored in folders and subfolders. The documents are categorised by the internal users of the CRM system. When uploading a document, the user selects the category for the document, for example tax form, client identification document, internal application form. This information is stored in the documents table on the database along with the unique ID of the record, the path for this document, as well as upload and processing information. The documents are separated into folders and stored by upload date. For example, documents uploaded on 29^{th} April 2009 are stored in a folder named 20090429. Documents uploaded the following day will be stored in a folder named 20090430. The DMS component automatically creates a new folder at the beginning of each day.

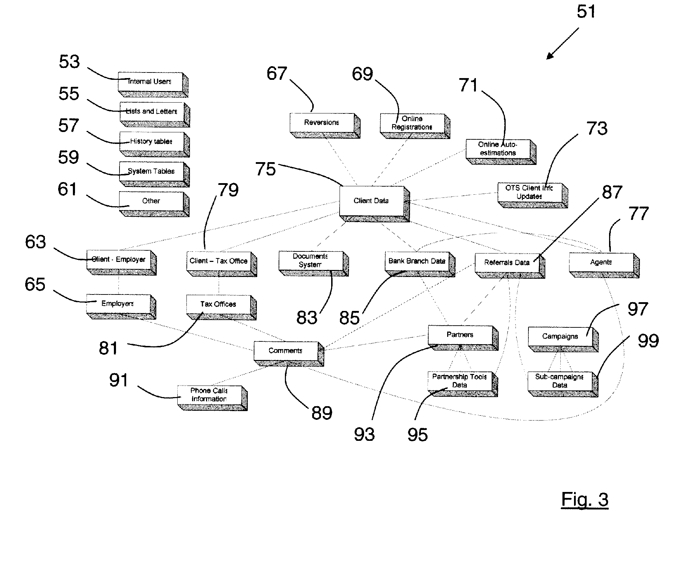

In order to upload a file into the DMS component, the user simply selects a client file on the CRM and clicks a button shown in the client file record on their VDU for the DMS component. A new window appears where the user clicks the option for uploading documents. A Windows ® Explorer ® window opens so the user can select the document they want to upload. When the user selects the document, they also select the document category. The user can save a note for this document if they so desire. When ready, the user clicks another button and the CRM system copies or moves the file from the initial location the user selected to the designated server into the folder for the day. Referring to Figure 3 of the drawings, there is shown a simplified representation of a CRM database. The CRM database, indicated generally by the reference numeral 51 comprises a plurality of tables, including Internal Users table 53, Lists and Letters table 55, History tables 57, System table 59, Other tables 61, Client-Employer table 63, Employers table 65, Reversions table 67, Online Registrations table 69, Online Auto-Estimations table 71, Online Tracking System (OTS) Client Info Updates table 73, Client Data table 75, Client Tax Office table 79, Tax Offices table 81, Documents System table 83, Bank Branch data table 85, Referrals Data table 87, Comments table 89, Phone Calls Information table 91, Partners table 93, Partnership Tools Data table 95, Campaigns table 97 and Sub-Campaigns Data table 99. Again, the Documents System 83 is integral to the CRM database 51.

The main tables and relationships are presented while the smaller tables and relationships are omitted for clarity. The CRM database consists of 132 tables in total only a few of which are shown. There are tables for the main components of the CRM database, for example Clients, Employers and Partners. There are also tables where two of the components are linked, for example Client-Employer table 63 and Client-Tax office table 79 and other tables for smaller lists, history tables, system information, and the like.

The tables are linked by ID references. ID references relate one table to another, so combined data can be viewed, exported, or otherwise manipulated. For example, the Client Data table 75 and the Documents System table 83 on the database are linked by ID references. The Document System table 83 contains a column that holds the client ID (the unique identifier of a particular client from the Client Data table 75) and this enables a list of all the documents uploaded for a given client file to be retrieved as the document records will have the same client ID. Similarly, the name of the client for whom a given document was uploaded can be retrieved by looking up the name in the Client Data table 75 using the client ID that was stored for that document in the Documents System table 83.

In the embodiment shown, the Client-Employer table 63 and Client-Tax Office Relationship table 79 have records and each record in them represents a combination between one client and one employer or between one client and one tax office respectively. The Partners table 93 and Campaigns table 97 are not directly connected, but logically they are by the referrals data table 87 as each partner and each subcampaign are separately connected with a referral. The Online Registrations 69, Autoestimations 71 and OTS Client Info Updates 73 tables contain information clients or customers have submitted through an appropriate website. This information is then transferred into the three tables 69, 71, 73 and then each record is associated with a client file. The registration, auto-estimation or updated information is available for review from within the client file record at any time.

The Internal Users table 53 keeps a record of the internal users of the CRM. The Lists and Letters table 55 comprises smaller tables with lists information predominantly. The History tables 57 keep the history for numerous actions performed on the CRM by the internal users. Those actions are recorded into separate tables. The actions might be related to the Client Data table 75, Partners table 93, Tax Office table 81 or other tables. The System tables 59 are used for some periodical processes that happen automatically, for example the transfer between the CRM database and an Online Tracking System and so on. The Other tables 61 comprise anything else which does not fit in the remaining table groups.

The CRM according to the present invention has been implemented using a PostgreSQL server v 8.3.0 using DynamiCube version 3.0, FarPoint Spread version 3.5 and Active Reports version 2.0. This allows concurrent access by over 300 users and furthermore provides a robust and efficient system. The internal users are able to increase their efficiency of operation by in excess of 20% of CRM client file records processed by implementing the CRM system according to the present invention. The present invention extends to computer programs containing program instructions to cause a computer to implement the CRM according to the invention. This computer program may be stored on or in a carrier such as a storage medium including a DVD, a CD, a CD-ROM, a floppy disc, a flash drive, a memory stick, a RAM, a ROM or other computer readable memory.

In this specification the terms "comprise, comprises, comprised and comprising" and the terms "include, includes, included and including" are all deemed totally interchangeable and should be afforded the widest possible interpretation. The invention is in no way limited to the embodiment hereinbefore described but may be varied in both construction and detail within the scope of the specification.

## Claims

1. A Customer Relationship Management system comprising a customer relationship management (CRM) component and a document management system (DMS) component, the DMS component is fully integrated within the CRM so that the documents in the DMS component are accessible from within a client file record;
the CRM component comprising:
a database comprising a plurality of sub-databases logically related to each other and interactive with each other, the sub-databases having a plurality of client files stored thereon and a plurality of third party files stored thereon, each sub-database client file being linked to another file in at least one other sub-database;
the DMS component comprising:
a plurality of folders and sub-folders containing documents, each folder and subfolder being associated with a client file, the plurality of folders and sub-folders containing documents are stored on a separate server, and in which the DMS component comprises a sub-database of the CRM component database, the DMS component sub-database in turn comprises a table having a path to a document in the separate server and a client file identifier.

2. A CRM system as claimed in claim 1 in which the DMS component is operable as an independent archiving system.

3. A CRM system as claimed in claim 1 or 2 in which each folder and subfolder is given an access permission level rating.

4. A CRM system as claimed in any preceding claim in which the CRM system comprises a pair of databases, an internal database accessible by the CRM internal users and an external database, periodically populated with data from the internal database and accessible by external users.

5. A CRM system as claimed in any preceding claim in which the database comprises a plurality of tables and in which the tables are linked to other tables by ID references.

6. A CRM system as claimed in any preceding claim in which a plurality of the folders and sub-folders are associated with a third party file.

7. A CRM system as claimed in any preceding claim in which the CRM is implemented on a PostgreSQL server.

8. A CRM system as claimed in claim 7 in which the PostgreSQL server uses at least DynamiCube version 3.0.

9. A CRM system as claimed in claim 7 or 8 in which the PostgreSQL server uses at least FarPoint Spread version 3.5.

10. A CRM system as claimed in claims 7 to 9 in which the PostgreSQL server uses at least Active Reports version 2.0.

11. A CRM system as claimed in any preceding claim in which there is provided a file ownership system.

12. A CRM system as claimed in any preceding claim in which there is provided a link within the client file record that provides access to one of the documents.

13. A CRM system as claimed in any preceding claim in which the DMS component sub-database table comprises the document category, the document upload date and user and the document processed date and user.

14. A computer program having program instructions to cause a computer to implement the CRM system as claimed in any preceding claim.
